# EUROPÄISCHE PATENTSCHRIFT

(11) **EP 4 200 147 B1**
(45) Veröffentlichungstag und Bekanntmachung des Hinweises auf die Patenterteilung: **26.03.2025**
(21) Anmeldenummer: 21736560.0
(22) Anmeldetag: 22.06.2021
(51) Int. Cl.: B60J 1/10, B60J 10/777

(54) **DICHTUNGSANORDNUNG FÜR EINE AN EINEM FAHRZEUG ANGEORDNETE FAHRZEUGSCHEIBE**
SEAL ASSEMBLY FOR A VEHICLE WINDOW ARRANGED ON A VEHICLE
ENSEMBLE JOINT D'ÉTANCHÉITÉ POUR UNE FENÊTRE DE VÉHICULE AGENCÉE SUR UN VÉHICULE

(30) Priorität: 20.08.2020 DE 102020121812
(43) Veröffentlichungstag der Anmeldung: 28.06.2023
(73) Patentinhaber: AUDI AG, 85045 Ingolstadt (DE)
(72) Erfinder: PICKL, Richard, 85095 Denkendorf (DE)
(86) Internationale Anmeldenummer: PCT/EP2021/066944
(87) Internationale Veröffentlichungsnummer: WO 2022/037825

(56) Entgegenhaltungen:
- WO-A2-2012/037190
- DE-A1- 102013 003 243
- FR-A1- 2 839 020
- JP-U- H0 286 809

## Beschreibung

Die Erfindung betrifft eine Dichtungsanordnung für eine an einem Fahrzeug angeordnete Fahrzeugscheibe, wobei die Dichtungsanordnung zwischen einem ersten Scheibenelement der Fahrzeugscheibe und wenigstens einem relativ zu dem ersten Scheibenelement beweglichen weiteren Scheibenelement der Fahrzeugscheibe angeordnet ist, wobei die Dichtungsanordnung einen ersten horizontalen Dichtungsabschnitt und wenigstens einen zweiten vertikalen Dichtungsabschnitt aufweist.

Aus der DE 10 2013 003 243 A1 ist eine Fahrzeugseitentüre bekannt mit einem ersten, ortsfest mit der Fahrzeugtür verbundenen Scheibenteil und einem zweiten, beweglichen Scheibenteil, wobei die zweigeteilte Scheibe aus einem Kunststoff besteht und dem zweiten Scheibenteil ein Versteifungselement zugeordnet ist.

Aus der Druckschrift EP 2 303 622 B1 ist eine Kombination aus einer Dichtung und einer ersten Scheibe, die mit einer zweiten Scheibe eines Kraftfahrzeugs zusammenwirken, bekannt.

Aus der Druckschrift US 2011 / 033 667 A1 ist ein Trennglas mit mindestens zwei Glaselementen bekannt.

Aus der Druckschrift DE 10 2018 218 332 A1 ist eine Dichtungsanordnung zwischen zwei flächig ausgebildeten Bauteilen bekannt.

Bei einer mehrteiligen Fahrzeugscheibe mit einem beweglichen Scheibenelement und einem zu diesen unbeweglichen, an einem Fahrzeug angeordneten Scheibenelement, entsteht bei einer hohen Fahrzeuggeschwindigkeit (insbesondere bei Geschwindigkeiten größer als 200 km/h) im Bereich der Scheibenelemente ein Unterdruck, der die Scheibenelemente nach außen zieht. Dadurch wird ein "Einfädeln/Abdichten" des beweglichen Scheibenelements schwierig. Diesem Problem kann mit einer zwischen den beiden Scheibenelementen angeordneten Dichtung, welche einen relativ großen Querschnitt aufweist, zumindest teilweise entgegengewirkt werden. Jedoch resultiert dies in einer Sichtverdeckung, insbesondere im Bereich einer Fahrzeugsäule.

Die der Erfindung zu Grunde liegende Aufgabe wird darin gesehen, eine Dichtungsanordnung für eine mehrteilige Fahrzeugscheibe bereitzustellen, die zum einen ein verbessertes Einfädeln/Abdichten von Scheibenelementen bei hohen Geschwindigkeiten ermöglicht, und zum anderen die Sicht nicht zusätzlich einschränkt.

Diese Aufgabe wird gelöst durch eine Dichtungsanordnung für eine an einem Fahrzeug angeordnete Fahrzeugscheibe mit den Merkmalen des Patentanspruchs 1 und durch ein Fahrzeug mit den Merkmalen des Patentanspruchs 10. Vorteilhafte Ausgestaltungen mit zweckmäßigen Weiterbildungen sind in den abhängigen Patentansprüchen angegeben.

Vorgeschlagen wird also eine Dichtungsanordnung für eine an einem Fahrzeug angeordnete Fahrzeugscheibe, wobei die Dichtungsanordnung einen ersten horizontalen Dichtungsabschnitt und wenigstens einen zweiten vertikalen Dichtungsabschnitt aufweist, wobei der erste Dichtungsabschnitt und der zweie Dichtungsabschnitt zwischen einem ersten Scheibenelement der Fahrzeugscheibe und wenigstens einem relativ zu dem ersten Scheibenelement beweglichen weiteren Scheibenelement der Fahrzeugscheibe angeordnet ist.

Dabei ist vorgesehen, dass der erste horizontale Dichtungsabschnitt eine größere Querschnittsfläche aufweist als der zweite vertikale Dichtungsabschnitt.

Im Zusammenhang mit der vorliegenden Anmeldung wird unter horizontal verstanden, dass sich der betreffende Dichtungsabschnitt entlang einer gedachten horizontalen Geraden, insbesondere von vorne nach hinten erstreckt. Dabei sollen auch geringfügige Abweichungen bzw. Neigungen bzw. Krümmungen relativ zu einer gedachten horizontalen Geraden unter die gewählte Begrifflichkeit "horizontal" fallen. Insbesondere soll mit dem horizontalen Dichtungsabschnitt auch ein zumindest abschnittsweises Schneiden/Kreuzen mit der gedachten horizontalen Geraden unter einem spitzen Winkel umfasst sein, wobei der Winkel beispielsweise weniger als 20°, insbesondere weniger als 10° beträgt. Der Begriff "horizontal" kann auch so verstanden werden, dass der horizontale Dichtungsabschnitt im Wesentlichen einer Konturlinie eines Fahrzeugdachs folgt.

Im Zusammenhang mit der vorliegenden Anmeldung wird unter vertikal verstanden, dass sich der betreffende Dichtungsabschnitt entlang einer gedachten vertikalen Geraden, insbesondere von oben nach unten erstreckt. Dabei sollen auch geringfügige Abweichungen bzw. Neigungen bzw. Krümmungen relativ zu einer gedachten vertikalen Geraden unter die gewählte Begrifflichkeit "vertikal" fallen. Insbesondere soll mit dem vertikalen Dichtungsabschnitt auch ein zumindest abschnittsweises Schneiden/Kreuzen mit der gedachten vertikalen Geraden unter einem spitzen Winkel umfasst sein, wobei der Winkel beispielsweise weniger als 40°, insbesondere weniger als 20° beträgt. Der Begriff "vertikal" kann auch so verstanden werden, dass der horizontale Dichtungsabschnitt im Wesentlichen einer Neigung einer Windschutzscheibe bzw. einer Neigung eines Rahmenelements, wie beispielsweise A-Säule oder vorderer Türrahmen einer Fahrzeugkarosserie folgt.

Durch Dichtungsabschnitte mit unterschiedlicher Querschnittsfläche wird eine variable Dichtung und Scheibenelementführung zwischen dem ersten Scheibenelement und dem weiteren Scheibenelement ermöglicht.

Eine größere Querschnittsfläche resultiert in einen vergrößerten "Einfädel-Bereich", der eine verbesserte Scheibenelementführung ermöglicht. Der zweite Dichtungsabschnitt kann hierbei als einfache Dichtung dienen, die durch die kleinere Querschnittsfläche eine zusätzliche Sichteinschränkung vermeidet.

Ferner kann der erste Dichtungsabschnitt mit dem zweiten Dichtungsabschnitt verbunden sein.

Der erste Dichtungsabschnitt und der zweite Dichtungsabschnitt können dazu eingerichtet sein, zumindest einen Randbereich des ersten Scheibenelementes und einen Randbereich des weiteren Scheibenelements aufzunehmen.

Hierbei können der erste Dichtungsabschnitt und der zweite Dichtungsabschnitt einen an dem weiteren Scheibenelement anliegenden oder in Anlage bringbaren Kontaktabschnitt aufweisen.

Der Kontaktabschnitt des ersten Dichtungsabschnitts kann dabei eine von dem Kontaktabschnitt des zweiten Dichtungsabschnitts unterschiedliche, insbesondere größere Kontaktfläche aufweisen. Durch die größere Kontaktfläche des ersten Dichtungsabschnitts kann ein größerer Randbereich des weiteren Scheibenelements aufgenommen werden. Dies ermöglicht es die Scheibenelementführung und Abdichtung insbesondere bei hohen Geschwindigkeiten zu verbessern.

Das weitere Scheibenelement kann relativ zu dem ersten Scheibenelement beweglich sein, insbesondere von dem ersten Dichtungsabschnitt und dem zweiten Dichtungsabschnitt weg oder zu diesen hin beweglich sein.

Das erste Scheibenelement und das weitere Scheibenelement können geneigt zueinander ausgerichtet sein, so dass ein Knick im Bereich der Dichtungsanordnung gebildet wird.

Das erste Scheibenelement und das weitere Scheibenelement können im Bereich einer Fahrzeugtüre des Fahrzeugs angeordnet sein.

Dabei kann das erste Scheibenelement ferner im Bereich einer vorderen Fahrzeugsäule des Fahrzeugs angeordnet sein.

Die obige Aufgabe wird auch gelöst durch ein Fahrzeug mit einer Dichtungsanordnung für eine an dem Fahrzeug angeordnete Fahrzeugscheibe wie oben beschrieben.

Dabei kann das weitere Scheibenelement beweglich mit einer Seitentüre des Fahrzeugs verbunden sein.

Das weitere Scheibenelement kann zumindest teilweise in der Seitentüre versenkbar sein.

Das erste Scheibenelement und das weitere Scheibenelement können so zueinander angeordnet sein, dass im Bereich der Dichtungsanordnung ein nach außen hin am Fahrzeug wahrnehmbarer Knick gebildet ist.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1A: eine vereinfachte und schematische Prinzipdarstellung einer Ausführungsform einer Dichtungsanordnung für eine an einem Fahrzeug angeordnete Fahrzeugscheibe;
- Fig. 1B: eine vereinfachte und schematische Prinzipdarstellung einer Ausführungsform der Dichtungsanordnung;
- Fig. 2A: eine vereinfachte und schematische Schnittdarstellung der Dichtungsanordnung;
- Fig. 2B: eine vereinfachte und schematische Schnittdarstellung der Dichtungsanordnung.

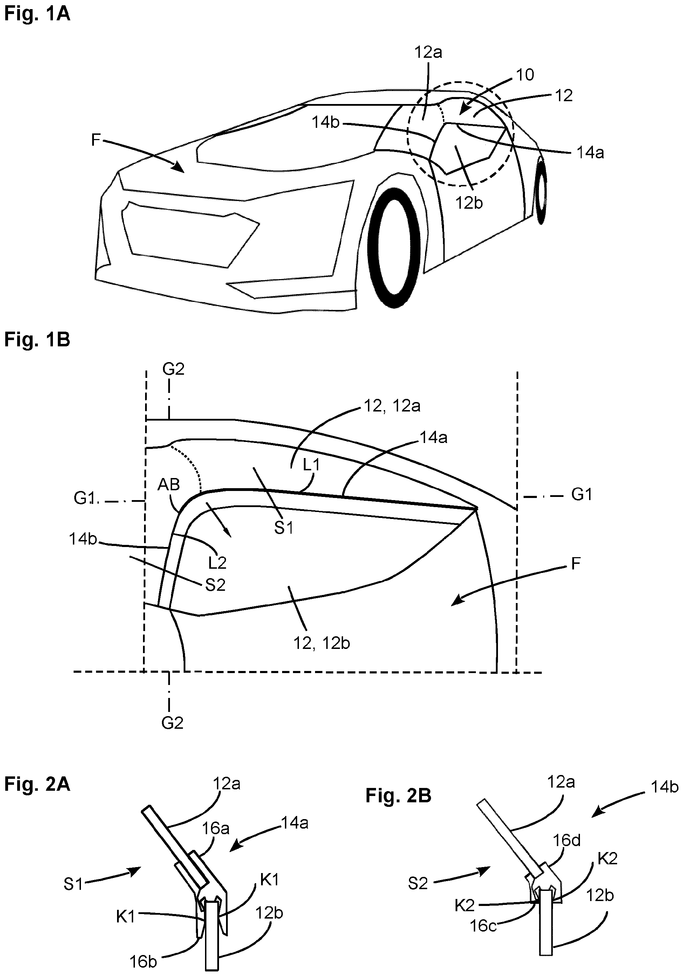

In Fig. 1A und Fig. 1B sind vereinfachte und schematische Prinzipdarstellungen einer Ausführungsform einer Dichtungsanordnung 10 für eine an einem Fahrzeug F angeordnete Fahrzeugscheibe 12 dargestellt. Die Dichtungsanordnung 10 ist zwischen einem ersten Scheibenelement 12a und wenigstens einem weiteren Scheibenelement 12b der Fahrzeugscheibe aufgenommen bzw. angeordnet. In dem in Fig. 1 gezeigten Beispiel sind zwei Scheibenelemente 12a, 12b gezeigt. Dies ist jedoch nicht einschränkend und die Fahrzeugscheibe 12 kann zusätzliche Scheibenelemente aufweisen. Die Dichtungsanordnung 10 umfasst ferner einen ersten Dichtungsabschnitt 14a und einen zweiten Dichtungsabschnitt 14b. Der erste Dichtungsabschnitt 14a kann sich beispielsweise im Wesentlichen horizontal zwischen dem ersten Scheibenelement 12a und dem weiteren Scheibenelement 12b erstrecken, wie in Fig. 1A und Fig. 1B gezeigt. Der zweite Dichtungsabschnitt 14b sich kann im Wesentlichen vertikal zu dem ersten Dichtungsabschnitt 14a zwischen dem ersten Scheibenelement 12a und dem weiteren Scheibenelement 12b erstrecken und sich ferner im Bereich einer Fahrzeugsäule (nicht in Fig. 1A und Fig. 1B gezeigt) des Fahrzeugs F befinden. Weitere Ausführungsformen für die Dichtungsabschnitte 14a, 14b sind möglich und das gezeigte Beispiel ist nicht einschränkend. Der in Fig. 1A durch den gestrichelten Kreis illustrierte Bereich ist in Fig. 1B vergrößert dargestellt.

Hierbei weist der erste Dichtungsabschnitt 14a eine von dem zweiten Dichtungsabschnitt 14b unterschiedliche Querschnittsfläche auf. Dies ist durch die breitere Linie für den ersten Dichtungsabschnitt 14a in Fig. 1B illustriert und wird später unter Bezugnahme auf Fig. 2A und Fig. 2B im Detail beschrieben. Mittels der unterschiedlichen Querschnittflächen können in den jeweiligen Dichtungsabschnitten 14a, 14b verschiedene Dichtungsprofile realisiert werden, die eine variable Scheibenelementführung ermöglichen.

Zum Beispiel entsteht bei einer hohen Geschwindigkeit des Fahrzeugs F, insbesondere bei Geschwindigkeiten größer als 200 km/h, ein Unterdruck, der die Scheibenelemente 12a, 12b nach außen zieht. Dies erschwert ein Einfädeln des weiteren Scheibenelements 12b in einem geöffneten Zustand, wie er beispielsweise in Fig. 1B illustriert ist.

Um diesem Effekt entgegenzuwirken, kann der erste Dichtungsabschnitt 14a daher eine größere Querschnittsfläche aufweisen als der zweite Dichtungsabschnitt 14b. Eine größere Querschnittsfläche und damit ein größerer "Einfädel-Bereich" gewährleistet eine effiziente Scheibenelementführung. Ferner kann die Querschnittsfläche des zweiten Dichtungsabschnitts 14b geringer sein als die des ersten Dichtungsabschnitts 14a, wodurch eine Sichtverdeckung, speziell schräg nach vorne in dem Bereich der Fahrzeugsäule des Fahrzeugs F, vermieden wird.

Der erste Dichtungsabschnitt 14a kann mit dem zweiten Dichtungsabschnitt verbunden sein. Dies kann in einer Ausführungsform durch ein Verbindungsabschnitt (nicht in Fig. 1A und Fig. 1B gezeigt), der einen kontinuierlichen Übergang vom ersten Dichtungsabschnitt 14a zu dem zweiten Dichtungselement 14b ermöglicht, realisiert werden. In einem weiteren nicht einschränkenden Beispiel können die beiden Dichtungsabschnitte 14a, 14b durch Klebeverbindung, oder dergleichen miteinander in Kontakt gebracht werden.

Der erste Dichtungsabschnitt 14a erstreckt sich horizontal entlang einer ersten Konturlinie L1. Der zweite Dichtungsabschnitt 14b erstreckt sich vertikal entlang einer zweiten Konturlinie L2. Dabei ist zu beachten, dass der Verlauf der Konturlinien L1, L2 bzw. der jeweiligen Dichtungsabschnitte 14a, 14b nicht zwingend exakt parallel zu einer angedeuteten Horizontalrichtung G1 bzw. Vertikalrichtung G2 angeordnet sein müssen. Vielmehr sollen die Begriffe "horizontal" und "vertikal" dahingehend verstanden werden, dass die Konturlinien L1, L2 die Horizontalgerade G1 bzw. die Vertikalgerade G2 auch unter einem Neigungswinkel schneiden können bzw. zumindest abschnittsweise geneigt oder/und gekrümmt hierzu verlaufen.

Der erste Dichtungsabschnitt 14a und der zweite Dichtungsabschnitt 14b können jeweils zumindest einen Randbereich des ersten Scheibenelementes 12a und einen Randbereich des weiteren Scheibenelementes 12b aufnehmen. Hierbei zeigen Fig. 2A und Fig. 2B vereinfachte und schematische Schnittdarstellungen einer Ausführungsform der Dichtungsanordnung. Fig. 2A zeigt die Schnittdarstellung im ersten Dichtungsabschnitt 14a entlang der in Fig. 1B durch S1 gekennzeichneten Linie. Fig. 2B zeigt die Schnittdarstellung im zweiten Dichtungsabschnitt 14b entlang der in Fig. 1B durch S2 gekennzeichneten Linie.

In dem in Fig. 2A und Fig. 2B gezeigten Beispiel kann der erste Dichtungsabschnitt 14a und der zweite Dichtungsabschnitt 14b jeweils ein erstes Dichtungselement 16a, 16c und wenigstens ein mit dem ersten Dichtungselement 16a, 16c verbundenes weiteres Dichtungselement 16b, 16d umfassen, was schematisch und vereinfacht illustriert ist. Die ersten Dichtungselemente 16a, 16c und die weiteren Dichtungselemente 16b, 16c können ferner Dichtlippen aufweisen, die derart angeordnet sind, dass sie den Randbereich des ersten Scheibenelements 12a und des weiteren Scheibenelements 12b zwischen sich aufnehmen können. Diese Ausführungsform ist jedoch nicht einschränkend und weitere Ausführungsformen für den ersten Dichtungsabschnitt 14a und den zweiten Dichtungsabschnitt 14b sind möglich.

In einer Ausführungsform können der erste Dichtungsabschnitt 14a und der zweite Dichtungsabschnitt 14b einen an dem weiteren Scheibenelement 12b anliegenden oder in Anlage bringbaren Kontaktabschnitt K1, K2 aufweisen.

Der Kontaktabschnitt K1 des ersten Dichtungsabschnitts 14a kann dabei eine von dem Kontaktabschnitt K2 des zweiten Dichtungsabschnitts 14b unterschiedliche, insbesondere größere Kontaktfläche aufweisen. Durch die größere Kontaktfläche des ersten Dichtungsabschnitts 14a, die beispielsweise durch die oben beschriebenen Dichtungselemente 16a, 16b des ersten Dichtungsabschnitts 14a bereitgestellt wird, kann ein größerer Randbereich des weiteren Scheibenelements 12b aufgenommen werden, wie in Fig. 2A dargestellt. Dadurch kann eine effiziente Scheibenelementführung und Abdichtung auch bei hohen Geschwindigkeiten ermöglicht werden.

Der Kontaktabschnitt K2 des zweiten Dichtungsabschnitts 14b kann hingegen eine kleinere Kontaktfläche aufweisen, wie in Fig. 2B dargestellt. Die oben beschriebenen Dichtungselemente 16c, 16d des zweiten Dichtungsabschnitts 14b können hierbei rein zur Abdichtung dienen. Die dadurch resultierende kleinere Querschnittsfläche des zweiten Dichtungsabschnitts 14b kann ferner eine Einschränkung der Sicht im Bereich der Fahrzeugsäule vermeiden.

Das weitere Scheibenelement 12b kann relativ zu dem ersten Scheibenelement 12a beweglich sein, insbesondere von dem ersten Dichtungsabschnitt 14a und dem zweiten Dichtungsabschnitt 14b weg oder zu diesen hin beweglich sein. Dies ist, wie oben beschrieben, in Fig. 1B gezeigt, wobei sich das zweite Scheibenelement 12b von dem ersten Scheibenelement 12a und dem ersten Dichtungsabschnitt 14a weg bewegt, was durch den Pfeil illustriert ist.

Das erste Scheibenelement 12a und das weitere Scheibenelement 12b können geneigt zueinander ausgerichtet sein, so dass ein Knick im Bereich der Dichtungsanordnung 10 gebildet wird.

Wie in Fig. 1A gezeigt, kann das erste Scheibenelement 12a und das weitere Scheibenelement 12b im Bereich einer Fahrzeugtüre des Fahrzeugs F angeordnet sein.

Das erste Scheibenelement 12a kann ferner im Bereich einer vorderen Fahrzeugsäule des Fahrzeugs F angeordnet sein. Beispielsweise kann das ersten Scheibenelement 14a fest mit einer Fahrzeugsäule verbunden werden, was durch die gepunktete Linie in Fig. 1A und Fig. 1B vereinfacht angedeutet ist.

Das in Fig. 1A gezeigte Beispiel für ein Fahrzeug F mit einer oben beschriebenen Dichtungsanordnung 10 ist nicht einschränkend. Das Fahrzeug F kann unterschiedlich ausgestaltet sein und beispielsweise vier Türen aufweisen.

Das weitere Scheibenelement 12b ist dabei beweglich mit einer Seitentüre des Fahrzeugs F verbunden.

Ferner kann das weitere Scheibenelement 12b zumindest teilweise in der Seitentüre versenkt werden.

Das erste Scheibenelement 12a und das weitere Scheibenelement 12b sind so zueinander angeordnet, dass im Bereich der Dichtungsanordnung 10 ein nach außen hin am Fahrzeug F wahrnehmbarer Knick gebildet ist.

## Patentansprüche

1. Dichtungsanordnung (10) für eine an einem Fahrzeug (F) angeordnete Fahrzeugscheibe (12), wobei die Dichtungsanordnung (10) einen ersten horizontalen Dichtungsabschnitt (14a) und wenigstens einen zweiten vertikalen Dichtungsabschnitt (14b) aufweist, wobei der erste Dichtungsabschnitt (14a) und der zweite Dichtungsabschnitt (14b) zwischen einem ersten Scheibenelement (12a) der Fahrzeugscheibe (12) und wenigstens einem relativ zu dem ersten Scheibenelement (12a) beweglichen weiteren Scheibenelement (12b) der Fahrzeugscheibe (12) angeordnet sind, **dadurch gekennzeichnet, dass** der erste horizontale Dichtungsabschnitt (14a) eine größere Querschnittsfläche aufweist als der zweite vertikale Dichtungsabschnitt (14b).

2. Dichtungsanordnung (10) nach Anspruch 1, **dadurch gekennzeichnet, dass** der erste Dichtungsabschnitt (14a) mit dem zweiten Dichtungsabschnitt (14b) verbunden ist.

3. Dichtungsanordnung (10) nach Anspruch 1 oder 2, **dadurch gekennzeichnet, dass** der erste Dichtungsabschnitt (14a) und der zweite Dichtungsabschnitt (14b) ferner dazu eingerichtet sind, zumindest einen Randbereich des ersten Scheibenelementes (12a) und einen Randbereich des weiteren Scheibenelements (12b) aufzunehmen.

4. Dichtungsanordnung (10) nach Anspruch 3, wobei der erste Dichtungsabschnitt (14a) und der zweite Dichtungsabschnitt (14b) einen an dem weiteren Scheibenelement (12b) anliegenden oder in Anlage bringbaren Kontaktabschnitt (K1, K2) aufweisen.

5. Dichtungsanordnung (10) nach Anspruch 4, wobei der Kontaktabschnitt (K1) des ersten Dichtungsabschnitts (14a) eine von dem Kontaktabschnitt (K2) des zweiten Dichtungsabschnitts (14b) unterschiedliche, insbesondere größere Kontaktfläche (K1) aufweist.

6. Dichtungsanordnung (10) nach einem der vorhergehenden Ansprüche, wobei das weitere Scheibenelement (12b) relativ zu dem ersten Scheibenelement (12a) beweglich ist, insbesondere von dem ersten Dichtungsabschnitt (14a) und dem zweiten Dichtungsabschnitt (14b) weg oder zu diesen hin beweglich ist.

7. Dichtungsanordnung (10) nach einem der vorhergehenden Ansprüche, wobei das erste Scheibenelement (12a) und das weitere Scheibenelement (12b) geneigt zueinander ausgerichtet sind, so dass ein Knick im Bereich der Dichtungsanordnung (10) gebildet wird.

8. Dichtungsanordnung (10) nach einem der vorhergehenden Ansprüche, wobei das erste Scheibenelement (12a) und das weitere Scheibenelement (12b) im Bereich einer Fahrzeugtüre des Fahrzeugs (F) angeordnet sind.

9. Dichtungsanordnung (10) nach Anspruch 8, wobei das erste Scheibenelement (12a) ferner im Bereich einer vorderen Fahrzeugsäule des Fahrzeugs (F) angeordnet ist.

10. Fahrzeug (F) mit einer Dichtungsanordnung (10) für eine an dem Fahrzeug (F) angeordnete Fahrzeugscheibe (12) nach den Ansprüchen 1 bis 9.

11. Fahrzeug (F) nach Anspruch 10, wobei das weitere Scheibenelement (12b) beweglich mit einer Seitentüre des Fahrzeugs (F) verbunden ist.

12. Fahrzeug (F) nach Anspruch 11, wobei das weitere Scheibenelement (12b) zumindest teilweise in der Seitentüre versenkbar ist.

13. Fahrzeug (F) nach einem der Ansprüche 11 oder 12, wobei das erste Scheibenelement (12a) und das weitere Scheibenelement (12b) so zueinander angeordnet sind, dass im Bereich der Dichtungsanordnung (10) ein nach außen hin am Fahrzeug (F) wahrnehmbarer Knick gebildet ist.

## Claims

1. Seal assembly (10) for a vehicle window (12) arranged on a vehicle (F), wherein the seal assembly (10) has a first horizontal sealing portion (14a) and at least one second vertical sealing portion (14b), wherein the first sealing portion (14a) and the second sealing portion (14b) are arranged between a first window element (12a) of the vehicle window (12) and at least one further window element (12b) of the vehicle window (12) that is movable relative to the first window element (12a), **characterised in that** the first horizontal sealing portion (14a) has a larger cross-sectional area than the second vertical sealing portion (14b).

2. Seal assembly (10) according to claim 1, **characterised in that** the first sealing portion (14a) is connected to the second sealing portion (14b).

3. Seal assembly (10) according to claim 1 or 2, **characterised in that** the first sealing portion (14a) and the second sealing portion (14b) are further configured to receive at least one edge region of the first window element (12a) and an edge region of the further window element (12b).

4. Seal assembly (10) according to claim 3, wherein the first sealing portion (14a) and the second sealing portion (14b) have a contact portion (K1, K2) that is in abutment, or can be brought into abutment, on the further window element (12b).

5. Seal assembly (10) according to claim 4, wherein the contact portion (K1) of the first sealing portion (14a) has a contact surface (K1) that is different from, in particular larger than, the contact portion (K2) of the second sealing portion (14b).

6. Seal assembly (10) according to any one of the preceding claims, wherein the further window element (12b) is movable relative to the first window element (12a), in particular movable away from or towards the first sealing portion (14a) and the second sealing portion (14b).

7. Seal assembly (10) according to any one of the preceding claims, wherein the first window element (12a) and the further window element (12b) are oriented inclined to each other, so that a kink is formed in the region of the seal assembly (10).

8. Seal assembly (10) according to any one of the preceding claims, wherein the first window element (12a) and the further window element (12b) are arranged in the region of a vehicle door of the vehicle (F).

9. Seal assembly (10) according to claim 8, wherein the first window element (12a) is further arranged in the region of a front vehicle pillar of the vehicle (F).

10. Vehicle (F) with a seal assembly (10) for a vehicle window (12) arranged on the vehicle (F) according to any one of claims 1 to 9.

11. Vehicle (F) according to claim 10, wherein the further window element (12b) is movably connected to a side door of the vehicle (F).

12. Vehicle (F) according to claim 11, wherein the further window element (12b) is at least partially retractable in the side door.

13. Vehicle (F) according to any one of claims 11 or 12, wherein the first window element (12a) and the further window element (12b) are arranged relative to each other such that an outwardly perceptible kink is formed on the vehicle (F) in the region of the seal assembly (10).

## Revendications

1. Dispositif d'étanchéité (10) pour une vitre de véhicule (12) disposée sur un véhicule (F), dans lequel le dispositif d'étanchéité (10) présente une première section d'étanchéité horizontale (14a) et au moins une seconde section d'étanchéité verticale (14b), dans lequel la première section d'étanchéité (14a) et la seconde section d'étanchéité (14b) sont disposées entre un premier élément de vitre (12a) de la vitre de véhicule (12) et au moins un élément de vitre supplémentaire (12b) de la vitre de véhicule (12) mobile par rapport au premier élément de vitre (12a), **caractérisé en ce que** la première section d'étanchéité horizontale (14a) présente une surface de section transversale plus grande que la seconde section d'étanchéité verticale (14b).

2. Dispositif d'étanchéité (10) selon la revendication 1, **caractérisé en ce que** la première section d'étanchéité (14a) est connectée à la seconde section d'étanchéité (14b).

3. Dispositif d'étanchéité (10) selon la revendication 1 ou 2, **caractérisé en ce que** la première section d'étanchéité (14a) et la seconde section d'étanchéité (14b) sont en outre configurées pour loger au moins une zone de bord du premier élément de vitre (12a) et une zone de bord de l'élément de vitre supplémentaire (12b).

4. Dispositif d'étanchéité (10) selon la revendication 3, dans lequel la première section d'étanchéité (14a) et la seconde section d'étanchéité (14b) présentent une section de contact (K1, K2) en appui ou pouvant être mise en appui sur l'élément de vitre supplémentaire (12b).

5. Dispositif d'étanchéité (10) selon la revendication 4, dans lequel la section de contact (K1) de la première section d'étanchéité (14a) présente une surface de contact (K1) différente de la section de contact (K2) de la seconde section d'étanchéité (14b), en particulier plus grande.

6. Dispositif d'étanchéité (10) selon l'une quelconque des revendications précédentes, dans lequel l'élément de vitre supplémentaire (12b) est mobile par rapport au premier élément de vitre (12a), en particulier est mobile à l'écart ou en direction de la première section d'étanchéité (14a) et de la seconde section d'étanchéité (14b).

7. Dispositif d'étanchéité (10) selon l'une quelconque des revendications précédentes, dans lequel le premier élément de vitre (12a) et l'élément de vitre supplémentaire (12b) sont orientés de manière inclinée l'un par rapport à l'autre, de sorte qu'un coude est formé au niveau du dispositif d'étanchéité (10).

8. Dispositif d'étanchéité (10) selon l'une quelconque des revendications précédentes, dans lequel le premier élément de vitre (12a) et l'élément de vitre supplémentaire (12b) sont disposés au niveau d'une porte de véhicule du véhicule (F).

9. Dispositif d'étanchéité (10) selon la revendication 8, dans lequel le premier élément de vitre (12a) est en outre disposé au niveau d'un montant de véhicule avant du véhicule (F).

10. Véhicule (F) avec un dispositif d'étanchéité (10) pour une vitre de véhicule (12) disposée sur le véhicule (F) selon les revendications 1 à 9.

11. Véhicule (F) selon la revendication 10, dans lequel l'élément de vitre supplémentaire (12b) est connecté de manière mobile à une porte latérale du véhicule (F).

12. Véhicule (F) selon la revendication 11, dans lequel l'élément de vitre supplémentaire (12b) est au moins partiellement escamotable dans la porte latérale.

13. Véhicule (F) selon l'une quelconque des revendications 11 ou 12, dans lequel le premier élément de vitre (12a) et l'élément de vitre supplémentaire (12b) sont disposés l'un par rapport à l'autre de sorte qu'un coude perceptible vers l'extérieur du véhicule (F) est formé au niveau du dispositif d'étanchéité (10).
